# EUROPÄISCHE PATENTSCHRIFT

(11) **EP 1 091 671 B1**
(45) Veröffentlichungstag und Bekanntmachung des Hinweises auf die Patenterteilung: **08.01.2003**
(21) Anmeldenummer: 99959106.8
(22) Anmeldetag: 29.06.1999
(51) Int. Cl.: A47J 31/40, A47J 31/36

(54) **KAFFEEMASCHINE**
COFFEE MACHINE
MACHINE A CAFE

(30) Priorität: 02.07.1998 CH 141398
(43) Veröffentlichungstag der Anmeldung: 18.04.2001
(73) Patentinhaber: M. Schaerer AG, 3302 Moosseedorf (CH)
(72) Erfinder: DREMMEL, Engelbert, CH-6376 Emmetten (CH)
(74) Vertreter: BOVARD AG - Patentanwälte
(86) Internationale Anmeldenummer: CH9900281
(87) Internationale Veröffentlichungsnummer: WO00001283

(56) Entgegenhaltungen:
- EP-A- 0 476 173
- CH-A- 590 041
- CH-A- 641 030
- DE-C- 3 843 568

## Beschreibung

Die vorliegende Erfindung betrifft eine Vorrichtung zum Herstellen eines Kaffeegetränkes aus Kaffeepulver gemäss dem Oberbegriff nach Anspruch 1 und ein Verfahren zum Herstellen eines Kaffeegetränkes nach Anspruch 9 mit einer entsprechenden Vorrichtung.

Eine derartige Vorrichtung ist beispielsweise in der CH-A-641 030 dargestellt.

Ein wichtiger Vorteil von automatischen Kaffeemaschinen liegt darin, dass einfach und ohne Aufsicht eine oder mehrere Tassen Kaffee und gegebenenfalls auf Wunsch mit unterschiedlicher Qualität zubereitet werden können. Allerdings wird das in Kaffeemaschinen verwendete Kaffeepulver in der Regel ungenügend genutzt bzw. werden zum Erhalten eines guten Aromas an sich zu grosse Mengen Pulver verwendet bzw. benötigt

In der CH-A-641 030 wird deshalb vorgeschlagen, dass bei einer Kaffeemaschine, aufweisend zwei Kolben, der eine der beiden Kolben während dem Brühen des Kaffeepulvers verschieblich ist, um ein Aufquellen des Kaffeepulvers zwischen den beiden Kolben zu ermöglichen. Wohl kann mit der vorgeschlagenen Lösung die benötigte Kaffeepulvermenge für die Zubereitung eines Kaffees reduziert werden, und es können auch feiner gemahlene Pulverqualitäten verwendet werden.

Dem aber immer grösser werdenden Bedürfnis, grössere Mengen Kaffee, d.h. innerhalb kürzester Zeit möglichst viele Tassen, gegebenenfalls mit unterschiedlicher Qualität, zuzubereiten, kann auch die in der CH-A-641 030 beschriebene Lösung nicht vollständig genügen.

Es ist daher eine Aufgabe der vorliegenden Erfindung, eine Vorrichtung bzw. ein Verfahren zur Zubereitung eines oder mehrerer Kaffees vorzuschlagen, welche bzw. welches eine schnellere Zubereitung ermöglicht und gleichzeitig gegenüber bekannten Vorrichtungen bzw. Kaffeeautomaten eine Vereinfachung darstellt.

Erfindungsgemäss wird die gestellte Aufgabe mittels einer Vorrichtung gemäss dem Wortlaut nach Anspruch 1 gelöst Vorgeschlagen wird, dass an einer Vorrichtung zum Herstellen eines Kaffeegetränkes aus Kaffeepulver durch Brühen und Extrahieren der Aromastoffe aus dem Pulver mittels Heisswasser oder einem anderen geeigneten Extraktionsmittel das Brühen des Kaffees in einem Brühraum erfolgt, welcher zwischen zwei verschieblichen Kolben ausgebildet ist. Dabei wird durch den einen Kolben hindurch das Extraktionsmittel, wie das Brühwasser, zugeführt und durch den anderen Kolben das Brühwasser zusammen mit dem Extrakt abgeführt, wobei nun erfindungsgemäss im anderen Kolben mindestens zwei Ausgangskanäle vorgesehen sind zum Abführen des Extrakt enthaltenden Extraktionsmittels bzw. Heisswassers aus dem Brühraum und mindestens einer der Ausgangskanäle verschliessbar ist.

Bevorzugte Ausführungsvarianten sind in den abhängigen Ansprüchen 2 und folgende charakterisiert, wobei weitere bevorzugte Ausführungsvarianten auch unter Bezug auf die Figuren näher beschrieben sind.

Gemäss einer Ausführungsvariante der Erfindung wird vorgeschlagen, dass der Betrieb bzw. die Steuerung der beiden verschieblichen Kolben hydraulisch mittels eines einzigen druckerzeugenden Organs erfolgt, welches Organ gleichzeitig für den Druck des Extraktionsmittels bzw. Heisswassers verantwortlich ist, welches durch den einen Kolben in den Brühraum eingegeben wird, zum Extrahieren der Aromastoffe aus dem Kaffeepulver. Weitere bevorzugte Ausführungsvarianten der Vorrichtung sind in den abhängigen Ansprüchen charakterisiert.

Als Ausgangsbasis für die vorliegende Erfindung dient die eingangs erwähnte CH 641 030, in welchem Schweizer Patent wiederum zwei verschiebliche Kolben vorgesehen sind, zwischen welchen der Brühraum für das Anordnen und Extrahieren des Kaffeepulvers vorgesehen ist Analog der CH 641 030 ist es nun auch ein Anliegen der vorliegenden Erfindung, dass das Kaffeepulver beim oder nach Überbrühen mit dem Heisswasser aufquellen kann, um eine bessere Extraktion zu ermöglichen. Nach ausreichendem Aufquellen des Kaffeepulvers wird hernach mit dem anderen Kolben das Kaffeepulver zusammengepresst und das den Extrakt bzw. die Aromastöffe enthaltende Extraktionsmittel, wie Heisswasser, abgepresst. Analog der CH 641 030 wird auch in der vorliegenden Erfindung das die Aromastoffe enthaltene Extraktionsmittel durch den anderen Kolben hindurch abgeleitet, wobei nun aber im Unterschied zum erwähnten Schweizer Patent diese Ableitung durch mindestens zwei Abflusskanäle erfolgt. Mit anderen Worten sind in der frontseitigen Oberfläche des anderen bzw. unteren Kolbens mindestens zwei Öffnungen angeordnet, welche sich durch den gesamten anderen bzw. unteren Kolben hindurch erstrecken. Auch wenn in der CH 641 030 in der frontseitigen Oberfläche des anderen Kolbens mehrere Auslassöffnungen vorgesehen sind, so münden diese doch letztendlich in ein und denselben Kanal, welcher sich durch den anderen Kolben hindurch erstreckt. Der grosse Vorteil des Sich-Erstreckens mindestens zweier Auslasskanäle durch den anderen Kolben hindurch liegt einerseits darin, dass gleichzeitig mehr Aromastoffe enthaltendes Extraktionsmittel aus dem Brühraum abfliessen kann und andererseits durch die Verschliessbarkeit mindestens eines der mehreren Abflusskanäle der Brühvorgang, das Extrahieren und auch das Abfliessen bzw. Erzeugen des oder mehrerer Kaffees gesteuert werden kann.

Ein weiterer Unterschied der vorliegenden Erfindung in bezug auf die CH 641 030 liegt darin, dass die Steuerung der zwei Kolben mittels ein und demselben Druckorgan erfolgt, währenddem in der CH 641 030 beide Kolben getrennt mittels Oelhydraulik betrieben werden. Vorzugsweise erfolgt der Betrieb bzw. die Steuerung der beiden Kolben in der vorliegenden Erfindung mittels einer wasserhydraulischen Pumpe, welche in einer bevorzugten Ausführungsvariante gleichzeitig dazu verwendet werden kann, um den Druck für das Einbringen des Extraktionsmittels in den Brühraum zu erzeugen. Mit anderen Worten kann gemäss einer bevorzugten Ausführungsvariante auf das Anordnen mehrerer druckerzeugender Mittel verzichtet werden, indem mittels einer einzigen Pumpe der gesamte Mechanismus und das Erzeugen des oder der Kaffees gesteuert bzw. betrieben werden kann.

Im weiteren wird ein Verfahren zum Herstellen von Kaffee gemäss dem Wortlaut nach Anspruch 9 vorgeschlagen. Wiederum dient als Ausgangsbasis die CH 641 030, wobei nun im Unterschied dazu das Ableiten des Kaffees aus dem Brühraum durch mindestens zwei Ausgangskanäle durch den anderen Kolben hindurch erfolgt, worauf das die Aromastoffe enthaltende Extraktionsmittel vor der Ausgabe in eine oder mehrere Tassen zunächst zusammengeführt und vermischt wird, um eine weitgehendst gleichbleibende Qualität in beiden Ausgangskanälen zu gewährleisten.

Weiter wird eine Ausgestaltung des Verfahrens vorgeschlagen, gemäss welchem mittels ein und demselben druckerzeugenden Organ, wie eine wasserhydraulische Pumpe, das Extraktionsmittel, wie das Heisswasser, in den Brühraum eingepresst bzw. eingetrieben wird und dasselbe druckerzeugende Organ ebenfalls für das Betreiben bzw. verschiebliche Bewegen des anderen Zylinders verantwortlich ist. Gemäss dem Verfahren ist nun vorgesehen, dass zunächst infolge des im Brühraum durch das Einpressen des Extraktionsmittels aufgebauten Druckes der andere Kolben in Brühraum-vergrössernder Richtung verschoben wird, worauf durch mindestens partielles Ausfliessen des Extraktionsmittels durch die mindestens zwei Kanäle durch den anderen Kolben hindurch und somit einem resultierenden Druckabbau im Brühraum der andere Kolben wieder in Brühraum-verkleinernde Richtung gepresst wird. Durch diesen Vorgang wird zunächst ermöglicht, dass das Pulver aufquillt und anschliessend, dass das Kaffeepulver im Brühraum vollständig ausgepresst wird bzw. das Extraktionsmittel weitgehendst vollständig ausgepresst wird.

Weitere bevorzugte Ausführungsvarianten der beiden erwähnten Verfahren sind wiederum in den abhängigen Ansprüchen charakterisiert.

Die Erfindung wird nun beispielsweise und unter Bezug auf die beigefügten Figuren näher erläutert.

Dabei zeigen:
Fig. 1 im Schnitt schematisch eine erfindungsgemässe Vorrichtung zum Herstellen von Kaffee,
Fig. 2 im Schnitt den unteren Kolben, aufweisend die zwei Ausgangs- bzw. Auslaufskanäle,
Fig. 3 im Schnitt eine Ausgangsöffnung aus dem Brühraum, kommunizierend in einen der beiden Ausgangskanäle, und
Fig. 4 einen schematischen Ablauf der Vorrichtung zum Herstellen von Kaffee für die Beschreibung des Funktionsablaufes.

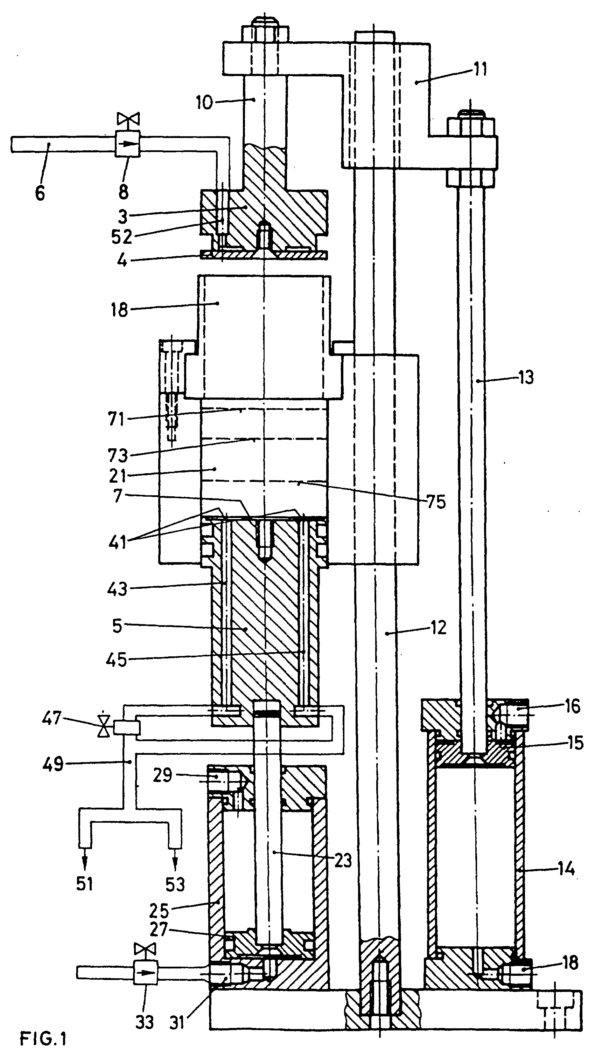

In Fig. 1 ist im Schnitt und schematisch derjenige Teil einer Kaffeemaschine dargestellt, in welchem das Extrahieren der Aromastoffe aus dem Kaffeepulver zum Erzeugen von einem oder mehreren Kaffees erfolgt. An einem ersten oberen Kolben 3 ist frontseitig eine Pressplatte bzw. ein Brühsieb 4 vorgesehen, zum Anpressen des Kaffeepulvers in einer darunter angeordneten Brühkammer 21. Für das Zuführen des Heisswassers ist eine Zufuhrleitung 6 vorgesehen, wobei für die Steuerung der zuzuführenden Menge ein Ventil 8 vorgesehen ist.

Der obere Kolben 3 ist über eine Kolbenstange 10, eine Halterung 11 mit einer weiteren Kolbenstange 13 verbunden, welche rückseitig eine Kolbenscheibe 15 aufweist, welche in einem Druckzylinder 14 verschieblich gelagert ist. Für das Betreiben bzw. Steuern des oberen Kolbens 13 sind Einlassöffnungen 16 und 18 im Druckzylinder 14 angeordnet, um die Kolbenscheibe 15 rückwärts - oder vorwärtszutreiben.

Gegenüberliegend zum einen bzw. oberen Kolben 3 ist der andere oder untere Kolben 5 angeordnet, aufweisend eine frontseitige Anpressplatte oder Siebplatte 7, wiederum vorgesehen, um das Kaffeepulver im Brühraum 21 gegen die andere Anpressplatte 4 des einen Kolbens hin zusammenzupressen. Der andere Kolben 5 weist rückwärtig eine Kolbenstange 23 auf, an deren Ende eine weitere Kolbenscheibe 27 angeordnet ist, die in einem weiteren Druckzylinder 25 verschieblich geführt ist. Wiederum mittels Einlassöffnungen 29 und 31 kann die Steuerung bzw. das Verschieben der Kolbenscheibe 27 erfolgen. Insbesondere der rückwärtige Einlass 31 weist ein Einlassventil 33 auf, um das Vorwärtstreiben des anderen Kolbens 5 zu steuern bzw. zu regeln.

Das Ausfliessen des die Aromastoffe enthaltenden Heisswassers aus dem Brühraum 21 erfolgt durch die beiden Öffnungen 41 unter der Anpressplatte bzw. dem Brühsieb 7, welche mit den beiden Auslass- bzw. Ausgangskanälen 43 und 45 kommunizieren, wobei mindestens einer der beiden Auslasskanäle 43 in einem weiteren Ventil 47 verschliessbar ist. Die beiden Auslasskanäle werden schlussendlich zusammengeführt, und die gemeinsame Abflussleitung 49 wird vorzugsweise in zwei Ausgabeöffnungen 51 und 53 aufgeteilt, damit beispielsweise gleichzeitig zwei Tassen mit Kaffee gefüllt werden können.

Der Betrieb der in Fig. 1 dargestellten Vorrichtung erfolgt, indem zunächst das rohe Kaffeepulver bei mindestens angehobener Stellung des einen Kolbens 3 und bei mindestens auf der gestrichelt dargestellten Position 73 abgesenkten anderen Kolbens eingegeben wird. Selbstverständlich ist es auch möglich, den anderen oder unteren Kolben in der in Fig. 1 ausgezogen dargestellten Stellung beim Füllen des Pulvers anzuordnen. Anschliessend wird durch Einführen von Wasserdruck durch die Einlassöffnung 16 die Kolbenscheibe 15 nach unten gedrückt und gleichzeitig der obere Kolben 3 nach unten getrieben, um den Brühraum 21 zu verschliessen. Anschliessend wird durch die Leitung 6 und das Ventil 8 unter Druck Heisswasser über die Durchgangsleitung 52 in den Brühraum eingetrieben bzw. das Kaffeepulver mit dem Heisswasser übergossen. Durch den Druckaufbau im Brühraum 21 wird nun der andere Kolben gegebenenfalls nach unten getrieben, falls er sich beispielsweise in der Ausgangsposition 73 befindet, welche gestrichelt dargestellt ist. Das Nach-unten-Pressen des anderen Kolbens 5 erfolgt deshalb, da der Druck im Brühraum 21 grösser ist als der Druck im Druckzylinder 25 rückseitig der Kolbenscheibe 27. Ein Nach-unten-Treiben des anderen Kolbens 5 erfolgt selbst dann, wenn der Druck im Brühraum 21 und der Druck rückseitig zur Kolbenscheibe 27 gleich ist, da der Querschnitt frontseitig am Kolben 5 grösser ist als der Querschnitt rückseitig der Kolbenscheibe 27. Da bekanntlich Kraft = Druck x Querschnitt ist, wird somit der andere Kolben 5 in Brühraum vergrössernder Richtung getrieben, wodurch ein Aufquellen des Kaffeepulvers ermöglicht wird und die Brühkammer unabhängig vom erhöhten Druck öffnet, um bei grösseren Kaffeepulvermengen in ungepresstem Zustand zu enorm schnellen Durchlaufzeiten zu kommen, durch Öffnung des Ventils 47. Nun zeigt sich aber bereits ein gewichtiger Vorteil der vorliegenden Erfindung, wenn für das Einbringen des Heisswassers und das Betreiben bzw. Steuern des anderen Kolbens ein und dasselbe Druckorgan, wie beispielsweise eine wasserhydraulische Pumpe, verwendet wird. Da der Brühraum 21 selbst dann vergrössert wird, wenn im Brühraum und rückseitig zur Kolbenscheibe 27 derselbe Druck herrscht, kann somit ein und dasselbe Druckorgan verwendet werden, wie oben beschrieben. Somit entfällt die Notwendigkeit der separaten Steuerung des anderen Kolbens 5.

Da jedoch das Heisswasser, enthaltend die extrahierten Aromastoffe, durch mindestens eine der beiden Ausgangsöffnungen 41 abfliesst, reduziert sich langsam der Druck im Brühraum 21. Damit erfolgt eine Umkehr in der Bewegung des anderen Kolbens 5, und nach einer gewissen Zeit wird dieser infolge Überdrucks durch Schliessung des Ventils 8 rückseitig an der Kolbenscheibe 27 wiederum in Brühraum-verkleinernder Richtung getrieben. Dadurch wird das Kaffeepulver zusammengepresst und das die Aromastoffe enthaltende Heisswasser weitgehendst vollständig ausgepresst.

Nach erfolgter Pressung des Pulverkuchens ist an sich der Vorgang zur Herstellung des Kaffees abgeschlossen, und der obere Kolben 3 wird wieder nach oben abgehoben, um den Brühraum freizugeben. Der ausgepresste Pulverkuchen wird durch den unteren Kolben 5 im Brühraum 21 nach oben getrieben und durch einen Kaffeetransportschieber 18 wegtransportiert. Nun kann eine weitere Menge Kaffeepulver in den Brühraum eingegeben werden.

Es ist nun einleuchtend, dass durch das Anordnen von zwei Ausgangsöffnungen und zweier mit den Oeffnungen kommunizierender Auslasskanäle 43 und 45 ein schnelleres Abfliessen des Heisswassers ermöglicht wird. Auch die Gefahr des Verstopfens wird reduziert, da die Wahrscheinlichkeit, dass zwei Oeffnungen verstopft werden, wesentlich geringer ist als beim Anordnen lediglich einer einzigen Oeffnung.

Je nach gewünschter Kaffeequalität, wie "normaler Kaffee", "Milchkaffeequalität", "Espresso", "doppelter Espresso", etc. kann die beschriebene Vorrichtung unterschiedlich betrieben werden. Insbesondere ist es auch möglich, beispielsweise den einen Kanal 43 mittels eines verschliessbaren Ventils 47 mindestens zu Beginn des Brüh- und Extraktionsvorganges zu schliessen, damit nicht noch relativ unbeladenes Heisswasser aus dem Brühraum 21 abfliessen kann. Nachfolgend sollen einige Beispiele zeigen, wie die dargestellte Vorrichtung betrieben werden kann:
1.
   - Der Kolben 5 befindet sich im angehobenen Zustand, gestrichelt dargestellt, bei Referenzzahl 73.
   - Das Kaffeepulver wird in den Brühraum 21 eingefüllt.
   - Der obere Kolben wird nach unten gepresst und fest positioniert.
   - Durch den Einlasskanal 52 wird Heisswasser in den Brühraum 21 eingetrieben und durch den Druckaufbau der andere Kolben 5 nach unten gepresst.
   - Durch das allmähliche Abfliessen des Heisswassers durch die beiden Kanäle 43 und 45 erfolgt ein Druckabbau im Brühraum 21, und der andere Kolben wird wieder allmählich nach oben getrieben. Dadurch wird das Kaffeepulver vollständig zusammengepresst und das die Aromastoffe enthaltende Heisswasser weitgehendst vollständig ausgepresst.
   - Durch die beiden Auslassöffnungen 51 und 53 erfolgt die Ausgabe des Kaffees.
   - Nach Abschluss des Vorganges wird der obere Kolben 3 wieder angehoben und der untere andere Kolben 5 in die gestrichelt dargestellte Position 71 angehoben, damit der extrahierte und ausgepresste Kaffeekuchen mittels des Schiebers 18 entfernt werden kann.
2.
   - Insbesondere bei grösseren Mengen Kaffeepulver, beispielsweise zum Erzeugen grösserer Mengen Kaffee erfolgt die Eingabe des Kaffeepulvers in den Brühraum 21 bei abgesenktem anderen Kolben 5.
   - Schliessen des Brühraumes durch Absenken und Positionieren des oberen Kolbens 3.
   - Eingabe des Heisswassers und Uebergiessen des lose auf dem unteren Kolben angeordneten Kaffeepulvers. Infolge der niedrigen Druckverhältnisse im Brühraum 21 erfolgt zunächst praktisch fast kein Auslaufen des die Aromastoffe enthaltenden Heisswassers durch die beiden Ausgänge 41. Nun wird jedoch der andere Kolben 5 nach oben getrieben, wodurch infolge Druckaufbau und Zusammenpressen des Kaffeepulvers das Heisswasser ausgepresst wird, worauf wiederum die Kaffeeausgabe durch die beiden Oeffnungen 51 und 53 erfolgt.
3.
   - Analoger Verfahrensverlauf wie unter 1., das Absenken des unteren Kolbens ist jedoch auf die gestrichelt dargestellte Position 75 beschränkt. Dies kann beispielsweise mittels einer mechanischen Blockierung bewerkstelligt werden. Diese Verfahrensweise ist vor allem dann sinnvoll, wenn relativ rasch kleinere Mengen Kaffeepulver zu extrahieren sind, d.h. relativ rasch ein "kleiner Kaffee" zu erzeugen ist.

Die Verschliessbarkeit einer der beiden Auslasskanäle 43 und 45 im Ventil 47 ermöglicht weitere Betriebsvarianten. So ist es beispielsweise möglich, zu Beginn des Brüh- und Extraktionsvorganges, das Ventil 47 geschlossen zu halten, wodurch nur Heisswasser durch die eine der beiden Oeffnungen 41 entweichen kann. Damit ist zumindest zu Beginn eine bessere Extraktion gewährleistet, und weniger noch praktisch unbeladenes Heisswasser verlässt den Brühraum 21. Nach einer gewissen Zeit, wie beispielsweise nach 2 - 5 Sekunden, wird das Ventil 47 geöffnet und das Ausfliessen des Heisswassers aus dem Brühraum 21 beschleunigt. Speziell bei der Herstellung von sogenannten Espresso-Kaffees, wo nur relativ kleine Mengen Wasser für die Extraktion der Aromastoffe verantwortlich sind, ist es wichtig, dass nicht bereits zu Beginn möglichst rasch das Heisswasser relativ unbeladen den Brühraum wieder verlässt. Andererseits ist es speziell bei der Herstellung von grösseren Mengen Kaffee bzw. bei der Verwendung grösserer Mengen Kaffeepulver nicht so entscheidend, ob das Ventil 47 zu Beginn noch verschlossen bleibt oder bereits von Anfang an geöffnet ist. Bei der Verwendung grösserer Mengen Pulvers und Heisswassers ist eher sichergestellt, dass die Aromastoffe auch umfassend und effizient extrahiert werden, insbesondere da ja schlussendlich das Pulver zusammengepresst und das Restwasser ausgetrieben wird.

Allerdings ist es selbstverständlich möglich, bei allen drei oben beispielsweise erwähnten Betriebsarten das Ventil 47 bereits von allem Anfang an offen zu halten, oder aber erst nach einer gewissen Zeit, wie beispielsweise 2 - 5 Sekunden, zu öffnen.

Bleibt noch zu erwähnen, dass selbstverständlich auch der Druckzylinder 14 bzw. der Bewegungsablauf des oberen Kolbens 3 mit demselben Druckorgan erfolgen kann, welches für das Eingeben des Heisswassers und für das Betreiben des unteren Kolbens verwendet wird. Im Unterschied zum unteren Kolben 5 wird der obere Kolben 3 im abgesenkten Zustand fest positioniert, so dass dessen Position während des Brüh- und Extraktionsvorganges nicht verändert wird. Diese Arretierung aber kann selbstverständlich mechanisch erfolgen, so dass es keine Rolle spielt, welche Druckverhältnisse im Brühraum 21 vorhanden sind.

Zusammenfassend ergibt sich folgender Funktionsablauf der erfindungsgemässen neuen Kaffeemaschine:
1. Produktetaste drücken.
2. Wasserpumpe wird eingeschaltet (ca. auf 10 bar Druck erhöht).
3. Kaffeemühle schaltet ein und mahlt die gewünschte Menge Kaffee.
4. Kaffeetransportschieber 18 wird über die Brühkammer 21 geschoben, und der ausgepresste Kaffeekuchen des vorangehenden Funktionsablaufes wird in einen Abfallbehälter befördert.
5. Der untere Kolben 5 wird nach unten gedrückt, die Brühkammer 21 ist offen, und das neue Kaffeepulver fällt in die Brühkammer.
6. Der Transportschieber 18 geht in Ausgangsstellung zurück.
7. Der obere Kolben 3 wird in die Brühkammer eingeführt und verschliesst dieselbe hermetisch.
8. **Erste Variante:** Der untere Kolben 5 wird nach oben geschoben und presst den Kaffeekuchen zusammen, kann aber auch geöffnet bleiben, insbesondere bei grösseren Kaffeemengen, wodurch das Kaffeepulver lose gebrüht wird und somit ein schnellerer Durchlauf ermöglicht wird.
   **Zweite Variante:** Der Kaffee wird in angepresstem Zustand gebrüht, und durch den in der Brühkammer 21 entstehenden erhöhten Druck wird der Kolben 5 nach unten gepresst, wodurch der Kaffee wiederum in weitgehendst losem Zustand gebrüht wird (der Kaffee kann schön aufquellen).
9. Das Brühventil 8 wird, wenn die eingestellte Wasser/Kaffee-Menge erreicht ist, geschlossen. Dadurch wird der Druck in der Brühkammer 21 abgebaut, und der Kolben 5 wird nach oben getrieben, um das Pulver auszupressen.
10. Der obere Kolben 3 fährt nach oben in Ausgangsstellung zurück, und somit kann der nächste Ablauf gestartet werden.

Der Vorteil der erfindungsgemäss beschriebenen Vorrichtung liegt nun einerseits darin, dass mit feinerem Kaffeepulver bei gleichzeitig grösserer Ausbeute gearbeitet werden kann, und zudem für das Erzeugen eines gleichkonzentrierten Kaffee-Extraktes weniger Pulver verwendet werden kann.

Im weiteren kann gegebenenfalls die Geschwindigkeit für das Herstellen von Kaffees massiv gesteigert werden, d.h. gegenüber heute bekannten Kaffee-Automaten kann die Herstellgeschwindigkeit für Kaffee mehr als verdoppelt werden.

Schlussendlich ist auf die extreme Bedienungs- und Wartungsfreundlichkeit der vorliegenden erfindungsgemässen Vorrichtung hinzuweisen, indem der Betrieb des gesamten Kaffee-Automaten mit nur einer Pumpe erfolgen kann und es sich bei dieser Pumpe um eine wasserhydraulische Pumpe handeln kann. Somit entfällt die Notwendigkeit der wartungsunfreundlichen Oelhydraulik oder Schrittmotoren.

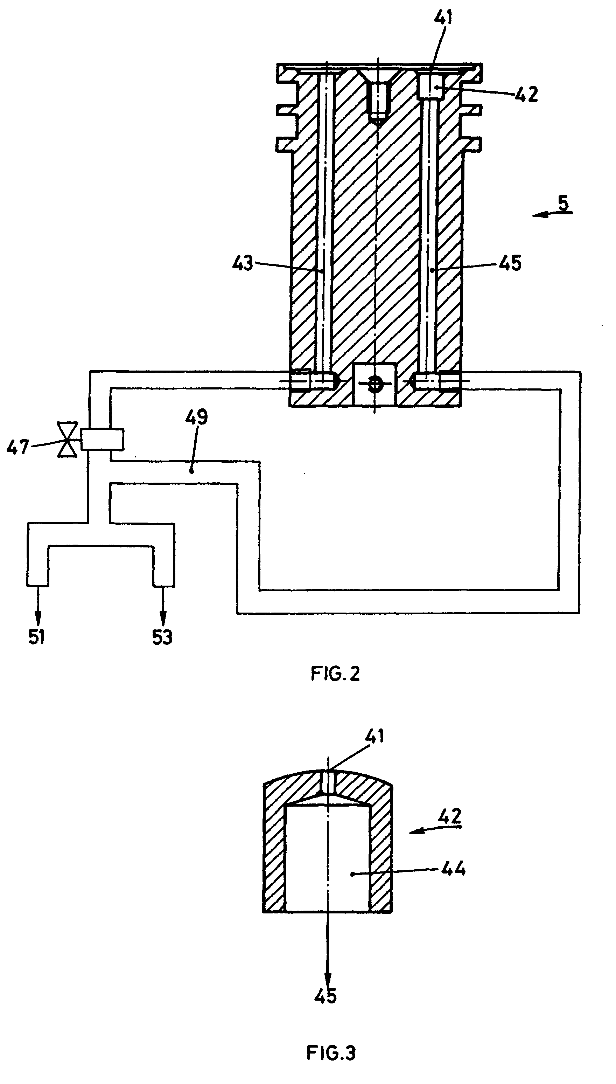

In Fig. 2 ist der untere Kolben 5 in nichtmontiertem Zustand dargestellt, wobei nun deutlich die beiden Auslaufkanäle 43 und 45 erkennbar sind, welche über Oeffnungen 41 mit dem frontseitigen Raum des Kolbens 5 kommunizieren.

In Fig. 3 ist die eine Oeffnung 41 aus Fig. 1 detailliert und in Vergrösserung dargestellt, wobei nun deutlich erkennbar ist, dass die kommunizierende Oeffnung 41 einen wesentlich geringeren Querschnitt aufweist als der darunterliegende Raum 44, welcher mit dem Auslaufkanal 45 kommuniziert. Vorzugsweise erfolgt die Herstellung der Verbindung zwischen dem Kanal 45 und dem darüberliegenden Raum durch das Einfügen eines hülsenartigen Einsatzes 42, wie in Fig. 3 dargestellt. Wichtig ist ja, dass die Oeffnung 41 relativ klein ist, damit nicht bereits zu Beginn des Brüh- und Extraktionsvorganges bei noch relativ geringem Druck bereits Heisswasser aus dem Brühraum 21 ausläuft. Erst bei erhöhtem Druck soll das mit Aromastoffen beladene Heisswasser durch die kleine Oeffnung 41 ausgetrieben werden.

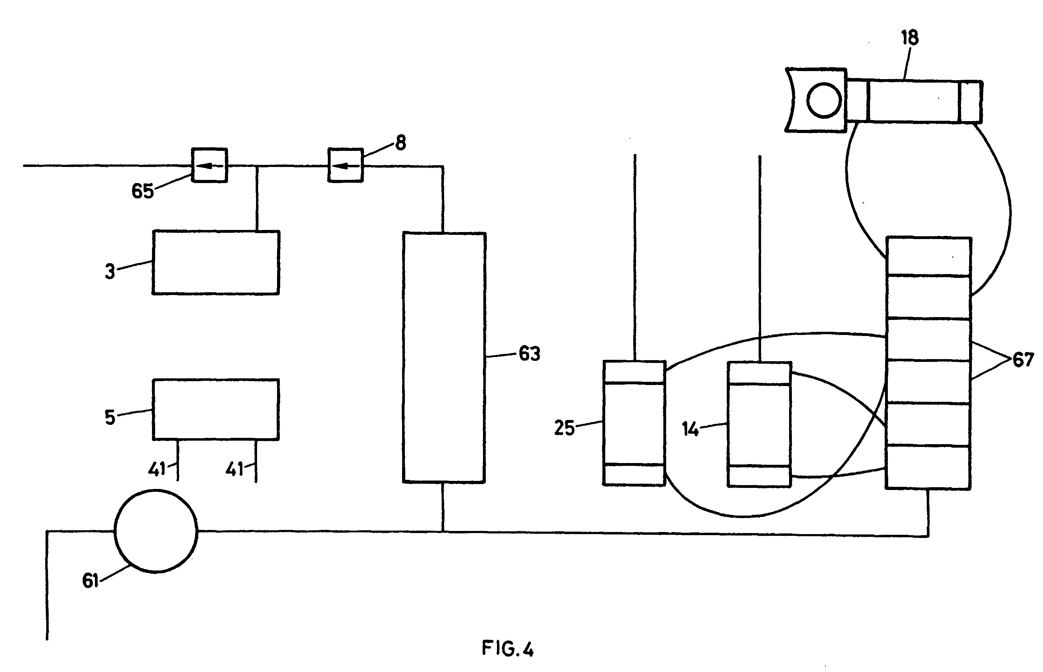

Fig. 4 schlussendlich zeigt schematisch den Antrieb der verschiedenen Funktionselemente, welcher durch eine einzige hydraulische Wasserpumpe 61 erfolgt. Durch diese Wasserpumpe 61 wird einerseits ein Boiler 63 gespiesen, aus welchem das Brühwasser über ein Brühventil 8 über den oberen Brühzylinder 3 in den Brühraum eingegeben wird. Zur Entlüftung ist ein Entlüftungsventil 65 vorgesehen.

Weiter erfolgt der Antrieb der beiden Antriebszylinder 14 und 25 wiederum mittels der hydraulischen Wasserpumpe 61, wobei vorzugsweise ein Ventilblock mit Magnetventilen 67 vorgeschaltet ist, mittels welchen der Antrieb der Zylinder gesteuert wird. Ebenfalls durch diese Magnetventile wird der Kaffeetransporteur 18 gesteuert.

Mittels einer nicht dargestellten, programmierbaren, elektronischen Steuerung können die verschiedenen Funktionselemente, wie insbesondere auch die Magnetventile 67, gesteuert werden, wobei beispielsweise verschiedenen Druckknöpfen unterschiedliche Programmabläufe zugeordnet werden können. Bevorzugte Programmabläufe sind vorab beispielsweise unter Bezug auf Fig. 1 näher erläutert worden.

Sowohl bei den Darstellungen in den Fig. 1 bis 4 wie auch bei den Betriebsbeschreibungen handelt es sich selbstverständlich nur um Beispiele, welche auf x-beliebige Art und Weise abgeändert, ergänzt oder modifiziert werden können. Somit wird insbesondere auf Konstruktionsmerkmale sowie auf Materialwahl nicht weiter hingewiesen, da diese grundsätzlich für die erfinderische Idee nicht massgebend sind. Ob nun Teile der erfindungsgemässen Vorrichtung aus rostfreiem Stahl, anderen metallischen Werkstoffen oder gar aus hochwertigen Kunststoffen gefertigt sind, ist schlussendlich eine Frage der Anforderung bzw. Güte der zu erzeugenden Kaffeemaschine. Auch die Wahl der Steuerung ist an sich unerheblich, da heute für derartige Betriebsabläufe eine Vielzahl von elektronischen Steuerungen zur Verfügung steht. Ob nun der Betrieb einer derartigen Kaffeemaschine mit einer erfindungsgemässen Vorrichtung mittels durch Druck betätigbaren Organen erfolgt, mittels Lochkarten oder anderen geeigneten betätigbaren Organen, ist an sich unerheblich. Auch ist es selbstverständlich möglich, die elektronische Steuerung derart auszugestalten, dass ein erfindungsgemäss ausgerüsteter Kaffeeautomat programmiert werden kann, so dass gewisse Betriebsabläufe gespeichert bzw. automatisiert sind.

Erfindungswesentlich ist, dass in einem mittels zweier Kolben betriebenen Kaffeeautomaten einer der beiden Kolben während des Brühens bzw. Extrahierens verschieblich steuerbar ist und dass der Ausfluss aus dem Brühraum durch mindestens zwei Auslauf- bzw. Ausgangskanäle erfolgen kann.

Gemäss einer weiteren Ausführungsvariante ist es wesentlich, dass in einer Kaffeemaschine, aufweisend zwei Kolben, die beiden Kolben sowie das Eingeben des Extraktionsmittels bzw. Heisswassers mit ein und demselben druckerzeugenden Organ erfolgt, wie beispielsweise einer wasserhydraulischen Pumpe.

## Patentansprüche

1. Vorrichtung zum Herstellen eines Kaffeegetränkes aus Kaffeepulver durch Brühen und Extrahieren der Aromastoffe aus dem Pulver mittels Heisswasser oder eines anderen geeigneten Extraktionsmittels, mit einem zwischen zwei verschieblichen Kolben (3, 5) ausgebildeten Brühraum (21), wobei durch den einen Kolben (3) hindurch das Heisswasser bzw. Extraktionsmittel zuführbar und durch den anderen Kolben (5) das Brühwasser bzw. Extraktionsmittel zusammen mit dem Extrakt abführbar ist, **dadurch gekennzeichnet, dass** im anderen Kolben (5) mindestens zwei Ausgangskanäle (43, 45) vorgesehen sind zum Abführen des den Extrakt enthaltenden Heisswassers bzw. Extraktionsmittels aus dem Brühraum (21), wobei mindestens einer der Ausgangskanäle (43, 45) verschliessbar ausgebildet ist.

2. Vorrichtung nach Anspruch 1, **dadurch gekennzeichnet, dass** der andere Kolben (5) während des Brühens verschieblich gelagert ist, so dass er durch den im Brühraum (21) entstehenden erhöhten Druck wegpressbar ist.

3. Vorrichtung nach Anspruch 1 oder 2, **dadurch gekennzeichnet, dass** der eine Kolben (3) mindestens während des Brühvorganges fest positionierbar ist und der andere Kolben (5) mit einem einstellbaren maximalen Druck bzw. einer maximal einstellbaren Kraft gegen den einen Kolben (3) hin drückbar verschieblich gelagert ist.

4. Vorrichtung nach einem der Ansprüche 1 bis 3, **dadurch gekennzeichnet, dass** die beiden Ausgangskanäle (43, 45) vor einer Ausgabeöffnung (51,53) des Kaffeegetränkes zusammengeführt sind, um den Inhalt der beiden Kanäle zu mischen.

5. Vorrichtung nach einem der Ansprüche 1 bis 4, **dadurch gekennzeichnet, dass** eine Steuerung vorgesehen ist zum Positionieren und Bewegen des anderen Kolbens (5), insbesondere auch während des Brühvorganges, und/oder zum Oeffrien/Schliessen des mindestens einen verschliessbaren Ausgangskanals (43).

6. Vorrichtung nach einem der Ansprüche 1 bis 5, **dadurch gekennzeichnet, dass** der Betrieb bzw. die Steuerung der Kolben (3, 5) hydraulisch mittels eines einzigen druckerzeugenden Organs (61) erfolgt, welches gleichzeitig für den Druck des Extraktionsmittels bzw. Heisswassers verantwortlich ist, mittels welchem letzteres in den Brühraum (21) eingegeben wird.

7. Vorrichtung nach einem der Ansprüche 1 bis 6, **dadurch gekennzeichnet, dass** als druckerzeugendes Organ eine wasserhydraulische Pumpe (61) vorgesehen ist.

8. Vorrichtung nach einem der Ansprüche 1 bis 7, **dadurch gekennzeichnet, dass** die frontseitig dem Brühraum (21) zugewandte Oberfläche des anderen Kolbens (5) grösser ist als die rückseitige Fläche einer an einer am anderen Kolben (5) rückseitigen Kolbenstange angeordneten Kolbenscheibe (27), welche mit einem Druck für das Steuern des anderen Kolbens (5) in einem Druckzylinder (27) beaufschlagt ist, so dass bei gleichem Druck im Brühraum und im rückseitig zur Kolbenscheibe (27) angeordneten Raum im Druckzylinder (25) der andere Kolben in Brühraum-vergrössernde Richtung verschoben wird.

9. Verfahren zum Herstellen eines Kaffeegetränkes aus Kaffeepulver mit einer Vorrichtung nach einem der Ansprüche 1 bis 8, **dadurch gekennzeichnet, dass** zunächst das Kaffeepulver in den Brühraum eingeführt wird, anschliessend mindestens der eine Kolben zum Verschliessen des Brühraumes in eine Schliessposition bewegt wird, anschliessend das Heisswasser bzw. Extraktionsmittel in den Brühraum eingegeben und das Pulver überbrüht wird, worauf der andere Kolben in Brühraum-verkleinemder Richtung bewegt wird und das mit dem Kaffee-Extrakt versehene Heisswasser bzw. Extraktionsmittel zunächst mindestens über einen Ausgangskanal den Brühraum verlässt und mindestens ein Ausgangskanal der mindestens zwei Ausgangskanäle zu Beginn des Brüh- bzw. Extraktionsvorganges verschlossen bleibt und erst verzögert geöffnet wird.

10. Verfahren nach Anspruch 9, **dadurch gekennzeichnet, dass** beim Eingeben bzw. nach dem Eingeben des Heisswassers in den Brühraum durch den Druck des Heisswassers bzw. Aufquellens des Pulvers der andere Kolben in Brühraum-vergrössernder Richtung getrieben wird, worauf durch das Auslaufen des den Extrakt enthaltenden Brühwassers bzw. Extraktionsmittels aus dem Brühraum und damit verbunden durch die Reduktion des Druckes im Brühraum der andere Kolben wieder in Brühraum-verkleinemder Richtung getrieben wird, um das Kaffeepulver zusammenzupressen und das Brühwasser wenigstens weitgehendst aus dem Pulver auszupressen.

11. Verfahren nach Anspruch 9, **dadurch gekennzeichnet, dass** der andere Kolben beim Eingeben des Pulvers und beim Eingeben des Heisswassers bzw. Extraktionsmittels in einer abgesenkten Position angeordnet ist, damit der Brühraum möglichst gross ist und das Kaffeepulver möglichst lose auf der frontseitigen Oberfläche des anderen Kolbens aufliegt, und dass erst nach vollständigem Ueberbrühen des Kaffeepulvers der andere Kolben in Brühraum-verkleinemder Richtung getrieben bzw. gepresst wird.

12. Verfahren nach einem der Ansprüche 9 bis 11, **dadurch gekennzeichnet, dass** der verschliessbare Ausgangskanal mit einer Verzögerung von mindestens 2 Sekunden, vorzugsweise 3-6 Sekunden, nach Beginn des Extraktions- bzw. Brühvorganges geöffnet wird.

13. Verfahren nach einem der Ansprüche 9 bis 12, **dadurch gekennzeichnet, dass** die Steuerung der beiden Kolben wie auch des Zuführens des Heisswassers bzw. Extraktionsmittels mit ein und demselben druckerzeugenden Organ, wie beispielsweise einer wasserhydraulischen Pumpe, erfolgt, indem nach Eingeben des Kaffeepulvers in den Brühraum der eine Kolben durch Druck in eine den Brühraum verschliessbare Position bewegt und arretiert wird, dass anschliessend das Zuführen des Heisswassers bzw. Extraktionsmittels wiederum unter Druck erfolgt, welcher durch das druckerzeugende Organ, wie die wasserhydraulische Pumpe, erfolgt, und dass schlussendlich der andere Kolben gesteuert wird, wiederum durch den Druck, welcher durch das druckerzeugende Organ, wie die wasserhydraulische Pumpe, aufgebaut wird.

14. Kaffeemaschine mit einer Vorrichtung nach einem der Ansprüche 1 bis 8.

## Claims

1. Device for producing a coffee beverage from coffee powder through brewing and extraction of the flavouring substances from the powder by means of hot water or another suitable extraction agent with a brewing chamber (21) formed between two displaceable pistons (3, 5), hot water or extraction agents being able to be supplied through the one piston (3), and the brewing water or extraction agents together with the extract being able to be led away through the other piston (5), **characterised in that** at least two exit channels (43, 45) are provided in the other piston (5) for leading away out of the brewing chamber (21) the hot water or extraction agents containing the extract, at least one of the exit channels (43, 45) being designed closable.

2. Device according to claim 1, **characterised in that** the other piston (5) is displaceably borne during the brewing so that it is able to be pressed away through the high pressure arising in the brewing chamber (21).

3. Device according to claim 1 or 2, **characterised in that** the one piston (3) is able to be positioned in a fixed way at least during the brewing process and the other piston (5) is borne in a pressable, displaceable way with an adjustable maximal pressure or a maximal adjustable force toward the one piston (3).

4. Device according to one of the claims 1 to 3, **characterised in that** the two exit channels (43, 45) are led together in front of a dispensing orifice (51, 53) for the coffee beverage in order to mix the content of the two channels.

5. Device according to one of the claims 1 to 4, **characterised in that** a control system is provided to position and move the one piston (5) in particular also during the brewing process and/or to open/close the at least one closable exit channel (43).

6. Device according to one of the claims 1 to 5, **characterised in that** the operation or control of the pistons (3, 5) takes place hydraulically by means of a single pressure-generating element (61), which is responsible at the same time for the pressure of the extraction agent or of the hot water, by means of which the latter is fed into the brewing chamber (21).

7. Device according to one of the claims 1 to 6, **characterised in that** a water hydraulic pump (61) is provided as the pressure generating element.

8. Device according to one of the claims 1 to 7, **characterised in that** the surface of the other piston (5) on the front side turned toward the brewing chamber (21) is larger than the rear-side surface of a piston disc of a piston rod disposed on the rear side of the other piston (5), which disc (27) is impinged in a pressure cylinder (27) <sic (25).> with a pressure for control of the other piston (5) so that with equal pressure in the brewing chamber and in the space disposed rear-sided with respect to the piston disc (27) in the pressure cylinder (25) the other piston is displaced in the brewing-chamber-enlarging direction.

9. Method for preparing a coffee beverage from coffee powder with a device according to one of the claims 1 to 8, **characterised in that** first the coffee powder is introduced into the brewing chamber, then at least the one piston is moved into a closing position for closing off the brewing chamber, then the hot water or extraction agent is introduced into the brewing chamber and the powder is brewed over, after which the other piston is moved in the brewing-chamber-decreasing direction and the hot water or extraction agent with the coffee extract first leaves the brewing chamber via at least one exit channel and at least one exit channel of the at least two exit channels remains closed at the beginning of the brewing or extraction process and is opened only with delay.

10. Method according to claim 9, **characterised in that** during introduction or after introduction of hot water into the brewing chamber the other piston is driven in the brewing-chamber-enlarging- direction through the pressure of the hot water or the swelling up of the powder, after which the other piston is driven in the brewing-chamber-decreasing direction by means of the exiting from the brewing chamber of the brewing water or extraction agent, containing the extract, in order to press together the coffee powder and to press the brewing water out of the powder at least to the furthest extent, and thus in connection with the reduction of the pressure in the brewing chamber.

11. Method according to claim 9, **characterised in that** during introduction of the powder and during introduction of the hot water or extraction agent the other piston is disposed in a lowered position so that the brewing chamber is as large as possible and the coffee powder lies as loosely as possible on the front-side surface of the other piston, and **in that** only after complete brewing over of the coffee powder the other piston is driven or pressed in the brewing-chamber-decreasing direction.

12. Method according to one of the claims 9 to 11, **characterised in that** the channel able to be closed off is opened with a delay of at least 2 seconds, preferably 3-6 seconds after beginning of the extraction or brewing process.

13. Method according to one of the claims 9 to 12, **characterised in that** the control of the two pistons as well as the introduction of the hot water or extraction agent takes place with one and the same pressure-generating element, such as, for example, a water hydraulic pump, **in that** after introduction of the brewing powder into the brewing chamber the one piston is moved through pressure into a position able to close off the brewing chamber and is locked, then the introduction of the hot water or extraction agent takes place again under pressure, which arises through the pressure-generating element, such as the water hydraulic pump, and **in that** finally the other piston is controlled, once again by means of the pressure built up through the pressure-generating element, such as the water hydraulic pump.

14. Coffee machine with a device according to one of the claims 1 to 8.

## Revendications

1. Dispositif pour la fabrication d'un breuvage au café réalisée à partir de mouture de café par infusion et extraction des substances aromatiques de la poudre au moyen d'eau chaude ou de tout autre moyen approprié d'extraction, le dispositif comprenant un espace d'infusion (21) réalisé entre deux pistons (3, 5), l'eau chaude respectivement le moyen d'extraction pouvant passer par l'un des pistons (3) et l'eau d'infusion respectivement le liquide d'extraction pouvant être acheminé par l'autre piston (5) ensemble avec le produit extrait, **caractérisé en ce que** il est prévu dans l'autre piston (5) au moins deux canaux de sortie (43, 45) pour l'évacuation de l'eau chaude contenant l'extrait de café respectivement le liquide d'extraction hors de l'espace d'infusion (21), au moins l'un des canaux de sortie (43, 45) pouvant être réalisé refermable.

2. Dispositif selon la revendication 1, **caractérisé en ce que** l'autre piston (5) est logé mobile pendant l'infusion de sorte qu'il peut être repoussé par la pression se formant dans l'espace d'infusion (21).

3. Dispositif selon la revendication 1 ou 2, **caractérisé en ce qu'**un piston (3) peut être positionné fixe au moins pendant l'opération d'infusion et **en ce que** l'autre piston (5) peut être logé mobile à une pression maximale réglable ou une force maximale réglable pour être poussé en direction de l'autre piston (3).

4. Dispositif selon l'une des revendications 1 à 3, **caractérisé en ce que** les deux canaux de sortie (43, 45) sont amenés ensemble devant un orifice de distribution (51, 53) pour mélanger le contenu des deux canaux.

5. Dispositif selon l'une des revendications 1 à 4, **caractérisé en ce qu'**il est prévu une commande pour le positionnement et le déplacement de l'autre piston (5), en particulier également pendant l'opération d'infusion et/ou pour l'ouverture/la fermeture au moins un canal de sortie (43) pouvant être fermé.

6. Dispositif selon l'une des revendications 1 à 5, **caractérisé en ce que** le fonctionnement respectivement la commande des pistons (3, 5) s'effectue par hydraulique au moyen d'un organe unique générateur de pression (61) qui est en même temps responsable de la pression du liquide d'extraction respectivement de l'eau chaude et qui amène l'eau dans l'espace d'infusion (21).

7. Dispositif selon l'une des revendications 1 à 6, **caractérisé en ce qu'**il est prévu une pompe à eau hydraulique (61) comme organe générateur de pression.

8. Dispositif selon l'une des revendications 1 à 5, **caractérisé en ce que** la surface de l'autre piston (5), tournée vers la face avant de l'espace d'infusion (21) est plus grande que la surface arrière d'un disque de piston (27) disposé sur une tige de piston se trouvant sur la face arrière de l'autre piston (5), disque qui subit l'impact d'une pression pour la commande de l'autre piston (5) dans un cylindre de pression (27) de sorte qu'en présence d'une pression identique dans l'espace d'infusion et dans l'espace disposé à l'arrière du disque de piston (27), l'autre piston est déplacé dans le cylindre de pression (25) dans une direction agrandissant l'espace d'infusion.

9. Dispositif pour la fabrication d'un breuvage au café à partir d'une mouture de café avec un dispositif selon l'une des revendications 1 à 8, **caractérisé en ce que** tout d'abord la mouture est introduite dans l'espace d'infusion, ensuite au moins l'un des pistons est déplacé dans une position de fermeture pour fermer l'espace d'infusion, ensuite, l'eau chaude respectivement le liquide d'extraction est versé dans l'espace d'infusion et la mouture est infusée, et l'autre piston est ensuite déplacé dans la direction diminuant l'espace d'infusion et l'eau chaude respectivement le liquide d'extraction muni de l'extrait de café quitte l'espace d'infusion tout d'abord par au moins un canal de sortie et au moins un canal de sortie parmi au moins les deux canaux de sortie reste fermé au début de l'opération d'extraction respectivement d'infusion et n'est ouvert que par action retardée.

10. Procédé selon la revendication 9, **caractérisé en ce qu'**au moment de l'introduction respectivement après l'introduction de l'eau chaude dans l'espace d'infusion, l'autre pison est poussé par la pression de l'eau chaude respectivement par gonflement de la mouture dans une direction augmentant l'espace d'infusion, après quoi par l'écoulement du liquide d'extraction respectivement de l'eau d'infusion contenant l'extrait sortant de l'espace d'infusion et la réduction consécutive de la pression dans l'espace d'infusion, l'autre piston est repoussé dans la direction réduisant l'espace d'infusion pour comprimer la mouture et extraire l'eau d'infusion au moins le plus possible hors de la poudre.

11. Procédé selon la revendication 9, **caractérisé en ce que** l'autre piston est disposé dans une position abaissée lors de l'introduction de la mouture et lors de l'introduction de l'eau chaude respectivement du liquide d'extraction afin que l'espace d'infusion soit le plus grand possible et que la mouture repose de manière la plus aérée possible sur la surface avant de l'autre piston, et **en ce que** seulement après l'infusion complète de la mouture, l'autre piston est poussé respectivement comprimé dans la direction diminuant l'espace d'infusion.

12. Procédé selon l'une des revendications 9 à 11, **caractérisé en ce que** le canal de sortie pouvant être fermé est ouvert avec un retard d'au moins 2 secondes, de préférence de 3 à 6 secondes après le début de l'opération d'extraction respectivement d'infusion.

13. Procédé selon l'une des revendications 9 à 12, **caractérisé en ce que** la commande des deux pistons ainsi que de l'amenée de l'eau chaude respectivement du liquide d'extraction s'effectue avec un seul et même organe générateur de pression, tel que par exemple une pompe hydraulique à eau, dans le fait qu'après l'introduction de la moulure dans l'espace d'infusion, l'un des piston est amené par pression et est bloqué en position de fermeture de l'espace d'infusion, **en ce qu'**ensuite l'amenée de l'eau chaude respectivement du liquide d'extraction s'effectue à nouveau sous pression qui est générée par l'organe générateur de pression tel que la pompe hydraulique à eau et **en ce que** pour finir l'autre piston est commandé à nouveau par la pression qui est générée par l'organe générateur de pression tel que la pompe hydraulique.

14. Machine à café munie d'un dispositif selon l'une des revendications 1 à 8.
